# EUROPEAN PATENT APPLICATION

(11) **EP 1 884 423 A1**
(43) Date of publication of application: **06.02.2008**
(21) Application number: 06016175.9
(22) Date of filing: 03.08.2006
(51) Int. Cl.: B60S 1/38

(54) **Wiper blade support structure**

(71) Applicant: Ku, Shu-Lan, Hsingchuang City Taipei Hsien, Taiwan (CN)
(72) Inventor: Ku, Shu-Lan, Hsingchuang City Taipei Hsien, Taiwan (CN)
(74) Representative: Berngruber, Otto

(57) **Abstract**

After being mounted with a wiper blade and a bridge base, a windshield wiper assembly can be combined with a wiper arm via a housing mounted on the bridge Base. The wiper blade support of the invention possesses a weight level design allowing the received pressure to be evenly diffused so as to make the wiper blade adaptive to the radian of any windshields for closely jostling against the windshield. Under the circumstances, the wiper blade is able to achieve better performance in wiping off rain.

## Description

### BACKGROUND OF THE INVENTION

### I. Field of the Invention

A wiper blade support is designed to mount a wiper blade. The invention relates, in particular, to a windshield wiper blade of weight level design.

### II. Description of the Prior Art

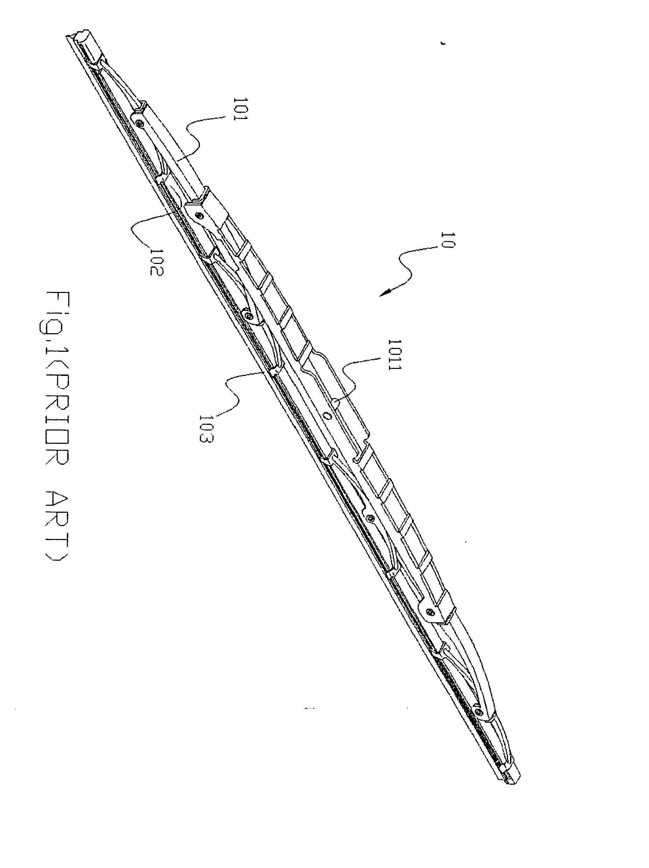

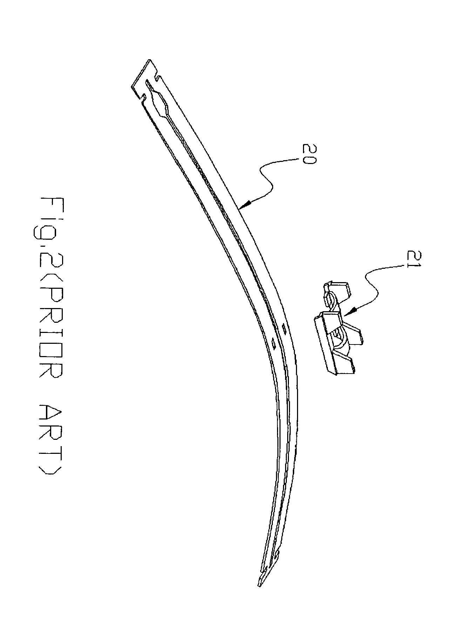

In order to fit onto various automobiles from different manufacturers, the windshield wiper assemblies sold on the market are too variable to be standardized. With reference to Fig. 1, which is a sectional view of a windshield wiper of the prior art, the windshield wiper assembly 10 comprises of a metal wiper frame 101, a wiper blade support 102 and a wiper blade 103. Besides, an adapter 1011 can be mounted on the wiper frame 101 to combine the windshield wiper assembly with a wiper arm. Its structure is complicated as to result of complex production and heavy costs. Hence, a new type of windshield wiper assembly, comprising a mono-blade support, is put on the market at present as per Fig.2, wherein a wiper blade support 20 consists of a simple structure allowing the wiper blade support 20, after installation, to jostle against the windshield with its flexibility and pre-shaped camber. Nevertheless, this mono-blade windshield wiper still completely practical for the following reasons. The key reason is that the pressure on the two ends of the wiper blade support 20 is relatively minimized: the housing 21 and wiper blade support 20 of the new windshield wiper assembly are mounted on a fixed position that causes downward pressure received by the housing 21, combined with a wiper arm, to diffuse to two ends from the central section of the wiper blade support 20; consequently, the downward pressure on the two ends is relatively minimized (because the force is equal but the effort arms are of different lengths). Another reason is that this mono-blade windshield wiper hardly achieves consistency in performance: the windshield wiper sometimes fails to clean the windshield well because the windshield radian is varied with different (automobile) models and the force and length of the wiper arm also vary. Windshield wipers of the same specifications hardly perform the same on automobiles of the same model. Consequently, this windshield wiper assembly hardly meets a high level of user satisfaction and receives rather diversified market evaluations.

### SUMMARY OF THE INVENTION

In view of the said drawbacks, the invention addresses an improved structure through analysis and study on each component. The objective of the invention is to provide a wiper blade support that adopts the weight level design so as to allow the wiper blade to closely jostle against the windshield after combining the windshield wiper assembly and the wiper arm.

The wiper blade support of the invention comprises a complex number of weight level holes on different positions so as to make the central section lighter than the two ends. Under the circumstances, the wiper blade support, combined with a housing, is able to effectively diffuse the received pressure to the extreme ends that make the whole wiper blade closely jostle against the windshield for better cleaning.

Further aspects, objects, and desirable features of the invention will be better understood from the detailed description and drawings that follow in which the embodiment of the disclosed invention is illustrated by way of example.

### BRIEF DESCRIPTION OF THE DRAWINGS

Fig. 1 is a cross sectional view showing the appearance of the windshield wiper assembly of the prior art.
Fig. 2 is a sectional view showing a mono-blade windshield wiper assembly of the prior art.
Fig. 3 is a cross sectional view showing the wiper blade support of the present invention.
Fig. 4 is a sectional view showing pressure analysis of the wiper blade support of the present invention.
Fig. 5 is a sectional view showing an embodiment of the present invention.
Fig. 6 is a cross sectional view showing an embodiment of the present invention.
Fig. 7 is a cross sectional view showing an embodiment of the present invention.
Fig. 8 is a sectional view showing embodiment (I) of the present invention.
Fig. 9 is a sectional view showing embodiment (II) of the present invention.
Fig.10 is a sectional view showing embodiment (III) of the present invention.

### DESCRIPTION OF THE PREFERRED EMBODIMENT

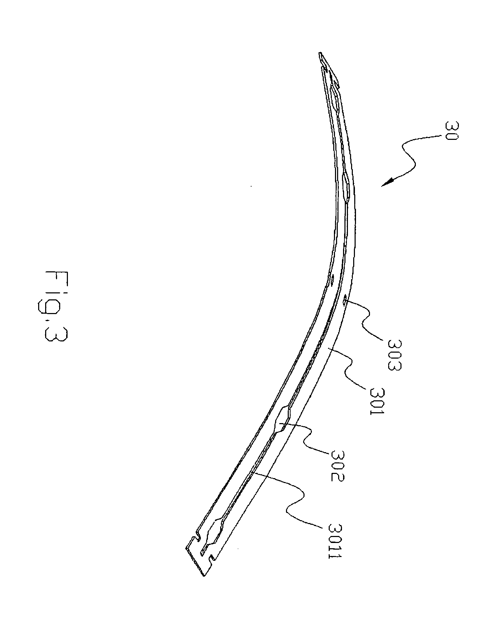

With reference to Fig.3, which is a cross sectional view of wiper blade support of the invention, the wiper blade support 30 of the invention comprises the support strip 301, which is punched with a complex number of weight level holes 302 so as to level the weight of different sections. In addition, the central section of the support strips is punched with a pair of positioning holes 303 for mounting a housing or a bridge base. Furthermore, the support strip is divided into two opposing support strips 301 by an interstice, which serves as an insertion channel 3011 for inserting the wiper blade 304 (not illustrated).

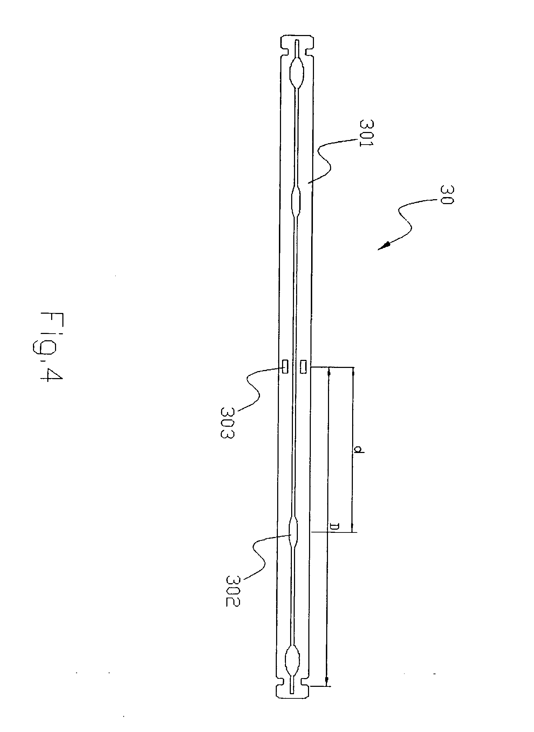

With reference to Fig. 4, which is a sectional view showing pressure of the wiper blade support of the invention, the position of a bridge or housing is in the center of the wiper blade support 30 so as to allow the received pressure to be evenly diffused to the two ends. Besides, the pressure application on the wiper blade support 30, shown per Fig. 4, is explained as follows: Points "d" and "D" are two hypothesized pressure points (points of force application). It is obvious that the distance from the central point of the support strip 301 to point "D" is longer than that to point "d" because point "D" is located at the extreme end on the right side of the blade support strip 301 and point "d" is half way. In other words, the effort arm from point "D" to the central point (fulcrum) is longer than that from point "d" to the central point. Consequently, the pressure received by point "D" is smaller than that by point "d" when the downward pressure received by the wiper blade support is diffused towards the two ends. The foregoing description reveals that wiper blades installed on the wiper blade support 30 has uneven pressure diffusion because the pressure is eventually attenuated from the center to the extreme end. In addition, the minimized pressure on the extreme end fails the wiper blade to thoroughly clean the windshield. Further reference is made to Fig. 4 for approaching the pressure that are respectively received by the extreme end and the central point of the blade support strip 301 without changing the length of the effort arm, two solutions are available: one is to increase the weight of the extreme end of the blade support strip, and the other is to reduce the weight thereof that allows the pressure received by the center point of the support strip 301 to be evenly diffused to the extreme end. The former relates to the design of weight dispensation, which means to make the extreme end of the support strip 301 heavier (to produce downward pressure) by dispensing external force thereon. The latter appears to be a more applicable solution in consideration of production costs. With reference to Fig. 4, the weight level hole 302 is distributed towards the extreme end from the central position for reducing the weight of the wiper blade. The optimal design is further in distance from the central position and bigger than the weight level hole 302. The weight level hole 302 is formed by stamping and the portions cut off effectively reduces the weight of the support strip so as to allow the received pressure to be evenly diffused to the extreme end.

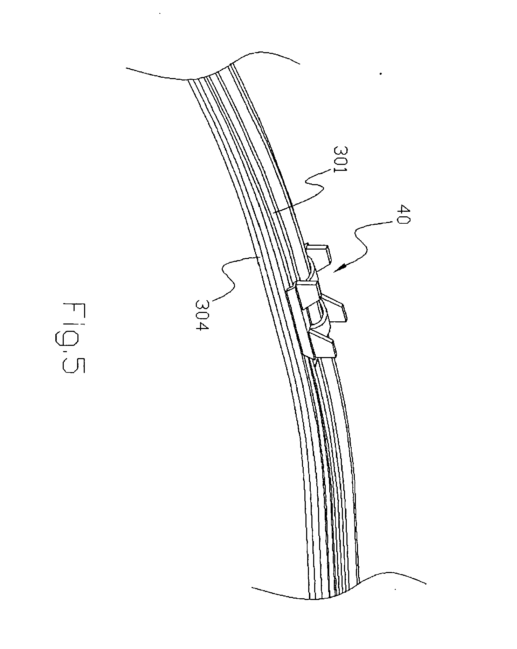

With reference to Fig. 5, which is a sectional view showing the embodiment of the invention, a bridge 40 is mounted on the wiper blade support 30 of the invention by mortising the bridge 40 to position hole 303.

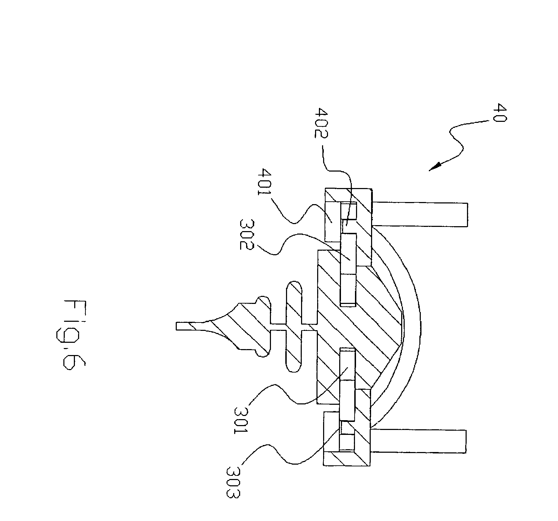

With reference to Fig. 6, which is a cross sectional view showing a bridge base 40 mortised to a position hole 303, the bridge base 40 is mounted on the wiper blade support 30 through mortising the bridge base 40 to the position hole 303. Several pins 401 on the bottom of the bridge base 40 are inserted into the edges on two sides of the support strip 301. Besides, several tenons 402 on the bottom of the bridge base 40 are mortised to position hole 303 of the support strip 301. A housing can be mounted on the bridge base 40.

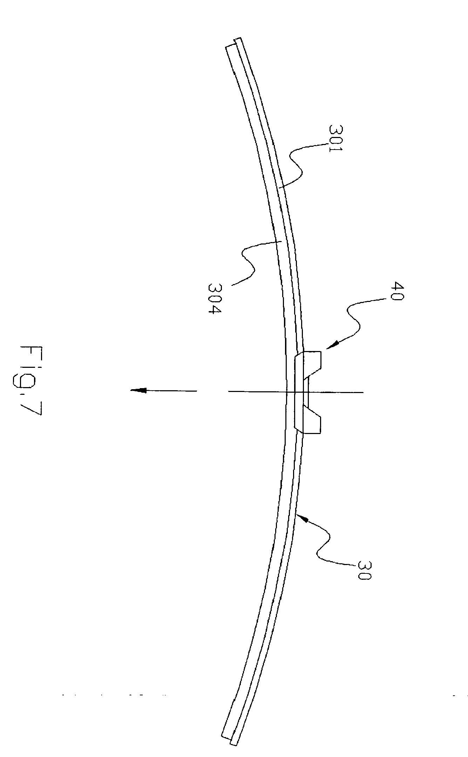

With reference to Fig. 7, which is a sectional view of an embodiment of the invention, in normal cases, the bridge base 40 or housing (not illustrated) is installed in the central position of the wiper blade support 30 with the hypothesis that the windshield has an even radian and the wiper arm has an even force application.

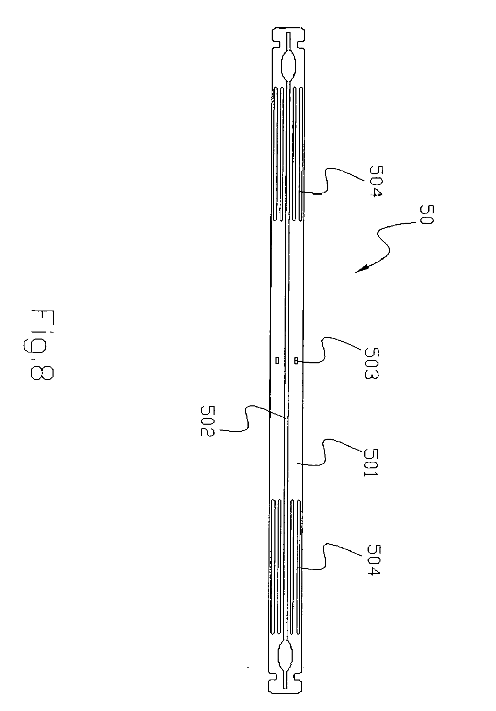

With reference to Fig. 8, which shows embodiment (I) of the invention, the wiper blade support 50 comprises two opposing support strips 501 that form an insertion channel 502 for blade insertion. In addition, the support strips 501 comprise position holes 503, which are located on the central position for mounting the bridge base, and several weight level holes 504, which are stamp formed oblong interstices between the central position and the extreme end so as to make the weight of the extreme ends lighter than the central position. Under the circumstances, the wiper blade support 50 is able to evenly diffuse the pressure received at the central position to the extreme ends of the support strips 501.

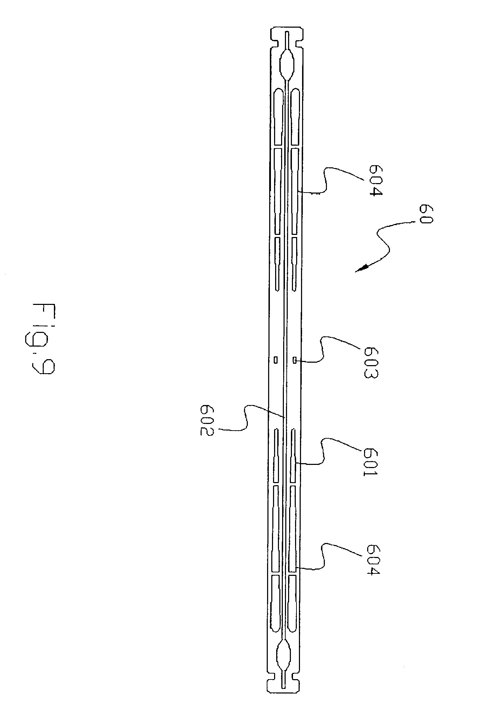

With reference to Fig. 9, which shows embodiment (II) of the invention, the wiper blade support 60 comprises two opposing support strips 601 that form an insertion channel 602 for blade insertion. Furthermore, the support strips 601 comprise position holes 603, which are located on the central position for mounting the bridge and several weight level holes 604, which are stamp formed oblong interstices, whose opening becomes bigger as it gets further from the central position, or when it is between the central position and the extreme end so as to make the weight of the extreme ends lighter than at the central position. Under the circumstances, the wiper blade support 60 is able to evenly diffuse the pressure received at the central position to the extreme ends of the support strips 601.

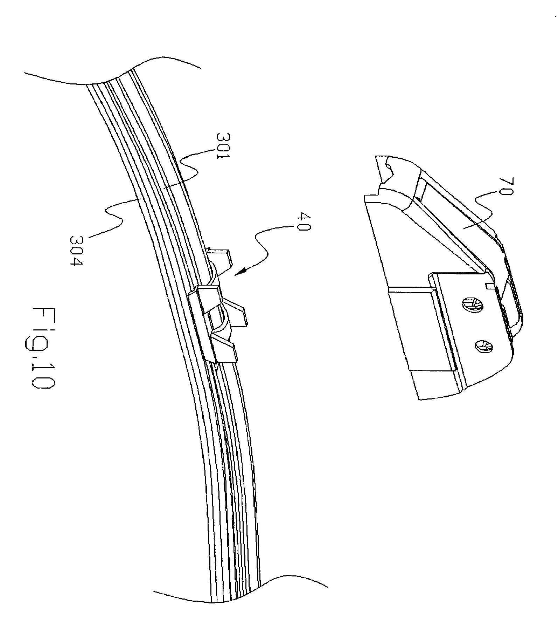

With reference to Fig. 10, which is a sectional view of embodiment (III) of the invention, a housing 70 which is a joint to combine the windshield wiper assembly and the wiper arm, is mounted on a bridge base 40 that is mounted on a wiper blade support 30. After combining the windshield wiper assembly and the wiper arm via a housing, movement of the wiper arm actuates the wiper blade 303 to jostle against the windshield to wipe off water drops.

The foregoing embodiments exhibit that wiper blade support of the invention mainly relates to a weight level design on the surface, which makes the wiper blade support have less weight at the extreme end than that at the central position so that the received pressure is evenly diffused to the extreme end. This design provides the mono-blade windshield wiper assembly with an optimal radian to maximize its practicality.

To sum up, through adopting a weight level design, the invention substantively achieves to provide a wiper blade support assuring the wiper blade completely and closely jostles against the windshield after combining a windshield wiper assembly and a wiper arm.

New characteristics and advantages of the invention covered by this document have been set forth in the foregoing description. Understanding is sought however, that the drawings are for the purpose of illustration only and not intended to be a definition of the limits of the invention. Changes in methods, shapes, structures, or devices may be made in detail without exceeding the scope of the invention by those who are skilled in the art. The scope of the invention is, of course, defined in the language in which the appended claims are expressed..

## Claims

1. A wiper blade support comprises of:
Two opposing support strips that form an insertion channel for blade insertion; and
Several weight level holes, stamp-formed between the central position and the extreme end of the wiper blade support so as to attenuate weight along the wiper blade support.

2. The "wiper blade support" of claim 1, wherein the weight level holes are a complex number of oblong interstices.

3. The "wiper blade support" of claim 1, wherein the opening of the weight level hole becomes smaller by approaching to central position from the extreme end of the wiper blade support.

4. The "wiper blade support" of claim 1, wherein a housing can be mounted on the bridge.

5. A wiper blade support comprises of:
Two opposing support strips that form an insertion channel for blade insertion; and
Several position holes, which are stamp formed on the surface of the support strip for mounting a housing; and
Several weight level holes, which are stamp formed between the central position and the extreme end of the wiper blade support so as to attenuate weights along the wiper blade support.

6. The "wiper blade support" of claim 5, wherein the weight level holes are a complex number of oblong interstices.

7. The "wiper blade support" of claim 5, wherein the opening of the weight level hole becomes smaller by approaching the central position from the extreme end of the support strip.
